# EUROPÄISCHE PATENTSCHRIFT

(11) **EP 3 168 252 B1**
(45) Veröffentlichungstag und Bekanntmachung des Hinweises auf die Patenterteilung: **09.01.2019**
(21) Anmeldenummer: 15194563.1
(22) Anmeldetag: 13.11.2015
(51) Int. Cl.: C08G 67/00, C08K 3/00, C08K 5/13, C08G 67/02, C08L 73/00

(54) **POLYKETON-FORMMASSEN MIT VERBESSERTEN EIGENSCHAFTEN, HIERAUS HERGESTELLTER FORMKÖRPER SOWIE VERFAHREN ZU DESSEN HERSTELLUNG**
POLYKETONE MOULDING MATERIALS WITH IMPROVED PROPERTIES, MOULDED PARTS PRODUCED THEREFROM AND METHOD FOR ITS MANUFACTURE
MASSES DE FORMAGE DE POLYCETONE PRESENTANT DES PROPRIETES AMELIOREES, CORPS DE MOULAGE AINSI FABRIQUE ET SON PROCEDE DE FABRICATION

(43) Veröffentlichungstag der Anmeldung: 17.05.2017
(73) Patentinhaber: EMS-PATENT AG, 7013 Domat / Ems (CH)
(72) Erfinder: Stöppelmann, Georg, CH-7402 Bonaduz (CH)
(74) Vertreter: Pfenning, Meinig & Partner mbB

(56) Entgegenhaltungen:
- EP-A1- 0 489 517
- EP-A2- 0 289 077
- EP-A2- 0 714 938
- WO-A1-00/12608
- WO-A1-93/01239
- GB-A- 2 322 861
- GB-A- 2 348 427
- US-A- 4 960 807
- US-A- 5 028 652
- US-A- 5 633 301

## Beschreibung

Die vorliegende Erfindung betrifft Polyketonformmassen auf Basis von teilkristallinen, aliphatischen Polyketonen. Insbesondere betrifft sie faserverstärkte Formmassen auf Basis aliphatischer Polyketone, die bevorzugtermaßen geringe Mengen an Phosphinsäure oder deren Salze enthalten. Die Formmassen zeichnen sich durch verbesserte mechanische Eigenschaften und einer guten Verarbeitbarkeit im Spritzguss aus. Diese Formmassen eignen sich zur Herstellung von insbesondere dünnwandigen Formkörpern für die Elektro- und Elektronik-Industrie wie beispielsweise Gehäusen, Gehäusekomponenten oder Konnektoren.

### Stand der Technik

Aliphatische Polyketone sind seit vielen Jahren bekannt und zeichnen sich durch nahezu konstante mechanische Eigenschaften zwischen 10 und 100°C, einer sehr guten Hydrolysebeständigkeit, einer hohen Wärmeformbeständigkeit, einer guten Verschleißfestigkeit und einer guten Barriere gegen Kraftstoffe aus.

Andererseits weisen aliphatische Polyketone, obwohl sie thermoplastische Kunststoffe mit durchwegs guten Eigenschaften darstellen, den Nachteil auf, dass sie relativ hohe Schmelzpunkte besitzen, die nahe den Temperaturen liegen, bei denen sie chemischem Abbau, insbesondere inter- und intramolekularen Aldolkondensationsreaktionen, unterliegen. Dies ist problematisch, da die Polyketonformmassen zum einen unter Verwendung üblicher Verarbeitungstechnologien in der Schmelze schwierig zu verarbeiten sind und zum anderen die Eigenschaften derartiger Formmassen durch die bei der Verarbeitung induzierten Abbau- und Vernetzungsreaktionen in Mitleidenschaft gezogen werden können.

Um diese Probleme zu überwinden, werden in der Literatur verschiedene mögliche Lösungen vorgeschlagen. Beispielsweise beschreibt EP213671 und EP257663 aliphatische Polyketone auf Basis von Kohlenmonoxid, Ethen und mindestens einem weiteren olefinisch ungesättigten Monomeren, die geringere Schmelzpunkte aufweisen als entsprechende Polyketon-Copolymere ausschließlich gebildet aus Kohlenmonoxid und Ethen. Die beispielhaft gezeigten Terpolymere können bei 20 - 30°C tieferen Temperaturen verarbeitet werden, bei denen der thermische Abbau und die Vernetzung langsamer abläuft. Damit besitzen diese Terpolymere ein größeres Verarbeitungsfenster. Das gleiche Ziel verfolgt DE2626272 mit einer polymeranalogen Umsetzung der Polyketone mit primären Monoaminen, Mono- oder Dithiolen, wobei der Schmelzpunkt des ursprünglichen Polyketons um bis zu 80°C gesenkt werden kann.

Dieser Lösungsansatz mildert das Problem in gewissem Maße, löst aber nicht alle Probleme bei der Verarbeitung von Polyketonen in der Schmelze. So werden zur weiteren Verbesserung der Polyketonformmassen Zusammensetzungen beschrieben, die auf dem Zusatz anderer Polymere, wie z.B. Polyamid oder Polyolefin, dem Zusatz von Weichmachern oder der Verwendung spezieller Additive beruhen. Die Verwendung von weiteren Polymeren hat allerdings den Nachteil, dass relative große Mengen davon erforderlich sind und somit insbesondere die thermischen und mechanischen Eigenschaften insgesamt verschlechtert werden. Abhängig vom zugesetzten Polymer können zudem unerwünschte Reaktionen mit dem Polyketon eintreten, infolgedessen die Eigenschaften der gebildeten Formmassen auf tiefem Niveau liegen. Weichmacher stellen andererseits nur dann einen gangbaren Lösungsansatz dar, falls flexible Formmassen gefragt sind.

Der Zusatz von Aluminiumsauerstoffverbindungen wird in EP310166 und EP326224 beschrieben. So soll z.B. Aluminiumhydroxid für eine Verbesserung des Fließverhaltens von Polyketonen sorgen, weil die Vernetzung bei der Verarbeitungstemperatur durch das Additiv verzögert eintritt und über die Verarbeitungsdauer auch langsamer abläuft.

Gemäß EP629663 oder EP896021 lässt sich die Schmelzverarbeitung von Polyketonen durch den Zusatz von 0.01 bis 10 % Pseudoböhmit weiter verbessern. Dabei verhindert Pseudoböhmit das allzu schnelle Ansteigen der Schmelzviskosität bei Verarbeitungstemperaturen von 20 K oberhalb der Schmelztemperatur der Polyketone.

Gemäß JP11-181080 können zwar Zusätze wie Aluminium- oder Magnesiumoxid das Fließverhalten während der Verarbeitung verbessern, aber nicht die Generierung von flüchtigen Verbindungen durch Abbau der Polyketone verhindern. Zur Reduktion oder Verhinderung der Ausgasungen wird die Behandlung der Polyketone mit Ammoniak oder primären Aminen vorgeschlagen.

DE19808938 betrifft u.a. die Stabilisierung von Polycarbonat, Polyester und Polyketon gegen oxidativen, thermischen und lichtinduzierten Abbau, wobei dem Polymer neben einer Benzofuran-2-on-Verbindung zusätzliche Stabilisatoren zugesetzt werden können, u.a. Phosphite und Phosphinate.

Soll neben der Fließfähigkeit auch noch die Farbe und die Kristallinität der Polyketonformmassen über die Verarbeitung hinweg gewahrt bleiben, empfiehlt EP896021 den Zusatz einer Kombination aus Aluminiumhydroxid und Polyol.

EP322959 beschreibt faserverstärkte Polyketonformmassen, insbesondere mit Glasfasern verstärkte Formmassen sowie ein Verfahren zur Herstellung dieser Formmasse aus einer Polyketonlösung. Ziel ist es die Festigkeit und den Modul der Formmassen zu erhöhen.

Die WO 00/12608 offenbart eine flammgeschützte Polyketonharzzusammensetzung, die ein Polyketonpolymer und ein Stickstoff haltiges Flammschutzmittel umfasst.

Aus der GB 2 322 861 A beschreibt Zusammensetzungen, die entweder Polycarbonate, Polyester oder Polyketone umfasst, wobei als stabilisierende Komponente eine Verbindung vom Benzofuran-2-on-Typ umfasst ist.

Aus der US 4,960,807 sind lineare alternierende Polymere von Kohlenmonoxid und zumindest einem ethylenisch ungesättigten Kohlenwasserstoff mit hoher Schmelzstabilität beschrieben. Die Zusammensetzungen beinhalten bestimmte Anteile an Zinkoxid, Zinksulfid sowie einem Trialkylphosphit.

Die EP 0 714 938 A2 beschreibt eine stabilisierte Polyketonzusammensetzung, deren oxidative Stabilität durch Kombination eines linearen alternierenden Polyketonpolymers mit geringen Mengen eines primären Antioxidans, einem sekundären Antioxidans und einem Radikalfänger erhöht ist.

Die US 5,63 3,301 offenbart eine flammgeschützte Polyketonzusammensetzung, die eine bizyklische Phosphor enthaltende Flammschutzkomponente, eine intumeszente Stickstoff und Phosphor enthaltende Flammenschutzkomponente, sowie, gegebenenfalls, eine Monophosphatesterkomponente beinhaltet, um die Kompatibilität der Zusammensetzung im Polymersubstrat zu verbessern.

Aus der EP 0 289 077 A2 ist eine thermostabilisierte Copolymerzusammensetzung bekannt, die ein alternierende Copolymer auf Basis von Kohlenmonoxid und einer Poly finnisch ungesättigten Komponente, sowie, basierend auf dem Gewicht des Copolymers, 0,03-5,0 Gew.-% eines additives, ausgewählt aus phenolischen Dicarboxylaten, phenolischen Dicarboxamiden zusammen mit phenolischen Phosphiten.

Die WO 93/01239 beschreibt eine Polymer Zusammensetzung, die gegen Abbau während der Verarbeitung in der Schmelze stabilisiert ist. Als Stabilisator wird eine Mischung aus Aluminiumtrialkoxiden oder Hydrolyseprodukten hiervon in Kombination mit einem Amin eingesetzt.

Aus der GB 2 348 427 A ist eine stabilisierte Polyketonzusammensetzung bekannt, die als Stabilisator zeolithische Aluminiumsilikate beinhaltet.

Die US 5,028,652 beschreibt eine stabilisierte Polymer Zusammensetzung, die ein Polymer aus Kohlenmonoxid und zumindest eine ethylenisch ungesättigten Kohlenwasserstoffeinheit sowie einer stabilisierenden Menge aus Zinkaluminat umfasst.

Aus der das EP 0 489 517 A1 ist eine stabilisierte Polyketonzusammensetzung bekannt, die eine Kombination aus zwei Stabilisatoren umfasst.

### Darstellung der Erfindung

Der Erfindung liegt demnach unter anderem die Aufgabe zugrunde, Formmassen auf Basis von teilkristallinen, aliphatischen Polyketonen bereit zu stellen, die mit Verstärkungsfasern sowie Phosphinsäuren oder deren Salzen ausgerüstet sind und die sich durch verbesserte mechanische Eigenschaften sowie einer guten Verarbeitbarkeit im Spritzgussprozess auszeichnen. Insbesondere sollen die Bruchfestigkeit, die Bruchdehnung und die Schlagzähigkeit gegenüber dem Stand der Technik verbessert sein. Weiterhin wird gefordert, dass die Formmassen eine ausreichend hohe Fließfähigkeit aufweisen sollen, um auch dünnwandige Formteile in guter Qualität herstellen zu können.

Diese Aufgabe wird erfindungsgemäß gelöst durch die Polyketonformmassen gemäß Anspruch 1. Mit Patentanspruch 11 werden Formkörper, die aus den erfindungsgemäßen Polyketonformmassen erhältlich sind, bereit gestellt. Patentanspruch 12 betrifft ein Verfahren zur Herstellung eines erfindungsgemäßen Formkörpers. Die jeweiligen abhängigen Patentansprüche stellen dabei vorteilhafte Weiterbildungen dar.

Die vorliegende Erfindung betrifft somit eine Polyketonformmasse, enthaltend oder bestehend aus
(A) 25 - 99,9 Gew.-% mindestens ein aliphatisches Polyketon;
(B) 0 - 70 Gew.-% Füll- oder Verstärkungsstoffe;
(C) 0,1 - 6 Gew.-% mindestens einer phosphorhaltigen Verbindung, ausgewählt aus der Gruppe bestehend aus
   - 0,1 - 6 Gew.-% mindestens einer Phosphinsäure oder mindestens einer Diphosphinsäure, einem Metallsalz und/oder einem organischen Derivat davon (Komponente C1);
   - 0,1 - 2 Gew.-% mindestens eines organischen Phosphits oder Phosphonits (Komponente C1);
   - 0,1 - 6 Gew.-% einer Mischung aus einer Phosphinsäure oder Diphosphinsäure oder einem Metallsalz dieser Phosphinsäuren (Komponente C1) und eines organischen Phosphits oder Phosphonits (Komponente C2), wobei die Mischung zu 0,05 - 2 Gew.-% aus Komponente C2 und zu 0,05 - 5,95 Gew.-% aus Komponente C1 besteht wobei zumindest eine der phosphorhaltigen Verbindungen (C1) und (C2) in der Polyketonformmasse vorhanden ist, so dass die Summe der phosphorhaltigen Verbindungen (C1) und (C2) zumindest 0.1 Gew.-% beträgt,
(D) 0 - 20 Gew.-% mindestens ein Additiv,
wobei die Summe aus (A) bis (D) 100 Gew.-% ergibt, die Gehaltsangaben für (A) bis (D) inklusive von (C1) und (C2) jeweils bezogen auf die Formmasse bzw. die Summe aus (A) bis (D) bezogen sind und wobei bevorzugt die Formmasse ausschließlich aus den Komponenten (A) bis (D) besteht.

Dabei ergeben die Gewichtsprozente der Komponenten A bis D zusammen 100% und bilden bevorzugtermaßen abschließend die gesamte Polyketonformmasse.

Die hier angegebenen und nachfolgenden Konzentrationen oder Konzentrationsbereiche beziehen sich jeweils entweder auf die Summe der Komponenten A bis D für den Fall dass die Formmasse offen formuliert ist ("enthaltend") oder auf die gesamte Formmasse für den Fall, dass die Formmasse geschlossen ("bestehend aus") formuliert ist. In letzterem Fall besteht die Formmasse ausschließlich aus den Komponenten A bis D.

Eine bevorzugte Ausführungsform sieht vor, dass bei der erfindungsgemäßen Polyketonformmasse jeweils unabhängig voneinander oder in Kombination miteinander der Gehalt
(A) des mindestens einen aliphatischen Polyketons 32 bis 89,7 Gew.-%, bevorzugt 41 bis 84,5 Gew.-% und ganz besonders bevorzugt 44 bis 79,5 oder 49 bis 69,5 Gew.-%,
(B) der Füll- oder Verstärkungsstoffe 10 bis 60 Gew.-%, bevorzugt zwischen 15 bis 55 Gew.-%, weiter bevorzugt 20 bis 50 Gew.-% und ganz besonders bevorzugt 30 bis 45 Gew.-%,
(C) der mindestens einen phosphorhaltigen Verbindung 0,2 bis 4 Gew.-%, bevorzugt 0,3 bis 3 Gew.-% und ganz besonders bevorzugt 0,8 bis 3 Gew.-%, sowie
(D) des mindestens einen Additives 0,1 bis 6 Gew.-%, bevorzugt 0,2 bis 3 Gew.-%
beträgt.

### Komponente (A)-Aliphatische Polyketone

Bei den erfindungsgemäß verwendeten aliphatischen Polyketonen handelt es sich um thermoplastische Polymere mit einer linearen alternierenden Struktur, die im Wesentlichen pro Molekül eines ungesättigten Kohlenwasserstoffs ein Kohlenmonoxid-Molekül enthalten. Geeignete ungesättigte Kohlenwasserstoffe sind insbesondere Olefine mit bis zu 20 Kohlenstoffatomen, bevorzugt bis zu 10 Kohlenstoffatomen, wie z.B. Ethen und andere α-Olefine einschließlich Propen, 1-Buten, Isobuten, 1-Hexen, 1-Octen und 1-Dodecen. Weiterhin sind auch olefinisch ungesättigte Verbindungen mit Arylsubsitutenten, wie z.B. Styrol, p-Methylstyrol, p-Ethylstyrol und m-Isopropylstyrol, als Monomer geeignet.

Im Sinne der Erfindung bevorzugte aliphatische Polyketone sind alternierende Copolymere aus Kohlenmonoxid und Ethen oder Terpolymere aus Kohlenmonoxid, Ethen und einem zweiten ethylenisch ungesättigten Kohlenwasserstoff mit mindestens 3 Kohlenstoffatomen, insbesondere mit einem α-Olefin wie Propen oder 1-Buten.

Insbesondere handelt es sich bei dem erfindungsgemäß eingesetzten Polyketon um ein Terpolymerisat der nachfolgenden allgemeinen Formel 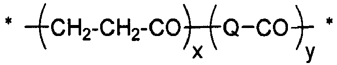 worin Q eine divalente Gruppe, abgeleitet von olefinsich ungesättigten Verbindungen mit mindestens 3 Kohlenstoffatomen ist und das molare Verhältnis y : x kleiner oder gleich 0,5, bevorzugt kleiner 0,2, insbesondere kleiner gleich 0,1 ist, insbesondere von 0,01 bis 0,1 beträgt. Q ist insbesondere die divalente Einheit -CH₂-CH(CH₃)-, die sich von Propen ableitet.

Gemäß einer bevorzugten Ausführungsform ist das mindestens eine aliphatische Polyketon ein teilkristallines Polyketon, bevorzugt mit einer Schmelztemperatur, gemessen mittels DSC nach ISO 11357-3 bei einer Aufheizrate von 20 K/min im Bereich von 180 °C bis 280 °C, insbesondere von 200 bis 240 °C.
Weiter vorteilhaft weist das aliphatische Polyketon eine Schmelzviskosität (MVR, melt volume-flow rate), bestimmt nach ISO 1133 bei 240°C und mit einer Auflage von 2.16 kg, im Bereich von 5 - 200 cm³/10min, insbesondere im Bereich 10 - 100 cm³/10min, ganz besonders bevorzugt im Bereich von 20 - 80 cm³/10min, auf.

Ebenso ist es möglich, dass das aliphatische Polyketon eine relative Viskosität, gemessen bei einer Polymerkonzentration von 0,5g Polymer gelöst in 100 ml m-Kresol bei 20°C mit einem Kapillarviskosimeter, von 1,5 bis 2,5, vorzugsweise von 1,6 bis 2,2 aufweist.

Die zuvor genannten Eigenschaften der aliphatischen Polyketone können alternativ oder kumulativ auftreten.

Das aliphatische Polyketon zeichnet sich weiterhin durch eine bevorzugte zahlenmittlere Molmasse, bestimmt mittels GPC in Hexafluoroisopropanol relativ zu PMMA-Standards, im Bereich von 20'000 bis 100'000 g/mol, insbesondere von 30'000 bis 60'000 g/mol aus.

Bevorzugt verwendbare aliphatische Polyketonpolymere sind an sich bekannt. Beispielsweise beschreibt die US 4,880,903 ein lineares alternierendes Polyketon-Terpolymer aus Kohlenmonoxid, Ethen und anderen olefinisch ungesättigten Kohlenwasserstoffen, insbesondere Propen. Bei Verfahren zur Herstellung der aliphatischen Polyketone ist in der Regel die Verwendung einer Katalysatorzusammensetzung aus einer Verbindung eines Metalls der Gruppe VIII, ausgewählt unter Palladium, Cobalt oder Nickel, dem Anion einer starken, nicht zu den Halogenwasserstoffsäuren gehörenden Säure und einem zweizähnigen Phosphor-, Arsen- oder Antimonliganden vorgesehen. In der US 4,843,144 wird ein Verfahren zur Herstellung von linearen alternierenden Polyketonpolymeren aus Kohlenmonoxid und mindestens einem olefinisch ungesättigten Kohlenwasserstoff beschrieben, bei dem man einen Katalysator verwendet, der eine Palladiumverbindung, das Anion einer nicht zu den Halogenwasserstoffsäuren gehörenden Säure mit einem pKa-Wert unter 6 und einen zweizähnigen Phosphorliganden enthält. Die Polymerisation wird beispielsweise in Methanol ausgeführt, welches gleichzeitig eine Initiator- und eine Kettentransferfunktion übernimmt, so dass solchermaßen hergestellt Polyketone ein typisches Endgruppenmuster aus Keto- und Estergruppen besitzt. Sämtliche der in diesen Patentschriften offenbarten Polyketone eignen sich bevorzugt auch für die Zwecke der vorliegenden Erfindung. Der diesbezügliche Offenbarungsgehalt der zuvor genannten US-Patente wird demzufolge auch mit in die vorliegende Anmeldung einbezogen.

### Komponente (B) - Füll- und Verstärkungsstoffe

Bevorzugte, für die Zwecke der vorliegenden Erfindung geeignete Füll- oder Verstärkungsstoffe sind dabei ausgewählt aus der Gruppe bestehend aus faser- oder teilchenförmigen Füllstoffen oder deren Mischungen, die bevorzugt mit einer Schlichte und/oder einem Haftvermittler ausgerüstet sind.

In einer bevorzugten Ausführungsform enthalten die erfindungsgemäßen Polyketon-Formmassen zusätzlich Füll- und Verstärkungsstoffe (Komponente B), insbesondere ausschließlich Verstärkungsstoffe.

Als Komponente (B) können die erfindungsgemäßen Formmassen 10 - 60 Gew.-%, bevorzugt zwischen 15 - 55 Gew.-%, weiter bevorzugt 20 - 50 Gew.-% und ganz besonders bevorzugt zwischen 30 und 45 Gew.-% an Füll- oder Verstärkungsstoffen oder deren Mischungen enthalten.

Verstärkungsstoffe, auch Verstärkungsfasern genannt, sind generell vorzugsweise ausgewählt aus der Gruppe Glasfasern, Kohlenstofffasern (Karbonfasern, Graphitfasern), Metallfasern, Aramidfasern (p- oder m-Aramidfasern (z.B. Kevlar® oder Nomex®, DuPont)), Basaltfasern und Whiskern, wie z. B. Kaliumtitanatwhiskern sowie Mischungen oder Kombinationen hieraus.

Die als Verstärkungsstoffe eingesetzten Glasfasern liegen bevorzugtermaßen in Form endloser Stränge (rovings) oder in geschnittener Form, insbesondere in Form von Kurzglasfasern (Schnittglas) vor.

Zur Verbesserung der Verträglichkeit mit den Polyketonen sind die Füllstoffe vorzugsweise, insbesondere Fasern wie z. B. Glasfasern, mit einer Schlichte und/oder einem Haftvermittler ausgerüstet.

Bevorzugt werden als Füllstoffe der Komponente (B) Glasfasern aus E-Glas eingesetzt.

Generell können Fasern der Komponente (B) einen kreisförmigen Querschnitt aufweisen oder einen nicht-kreisförmigen Querschnitt, wobei auch Mischungen von solchen Systemen eingesetzt werden können.

Bevorzugt werden im Fall von runden Fasern solche mit einen Durchmesser von 5 bis 20 µm, bevorzugt von 6 bis 15 µm und besonders bevorzugt von 7 bis 12 µm eingesetzt.

Bevorzugt werden im Fall von flachen Fasern solche eingesetzt, welche ein Verhältnis der senkrecht aufeinander stehenden Querschnittsachsen größer oder gleich 2, insbesondere im Bereich von 2,8 - 4,5, aufweisen, und deren kleinere Querschnittsachse einer Länge von ≥ 4 µm aufweist.

Die Glasfasern bestehen dabei bevorzugt aus E-Glas. Es können aber auch alle anderen Glasfasersorten, wie z.B. A-, C-, D-, M, S-, R-Glasfasern oder beliebige Mischungen davon oder Mischungen mit E-Glasfasern eingesetzt werden. Die Glasfasern können dabei als Endlosfasern oder als geschnittene Glasfasern zugesetzt werden, wobei die Fasern mit einem geeigneten Schlichtesystem und einem Haftvermittler bzw. Haftvermittlersystem, z. B. auf Silanbasis, Aminosilan oder Epoxysilan, ausgerüstet sein können. Bevorzugt wird Schnittglas, sogenannte Kurzglasfasern aus E- oder S-Glas, verwendet. Bevorzugt werden polare Schlichten, wie sie auch für Polyester oder Polyamide eingesetzt werden.

Vorzugsweise sind die Glasfasern (B) ausgewählt aus der Gruppe bestehend aus:
- E-Glasfasern (diese bestehen gemäß ASTM D578-00 aus 52-62% Siliciumdioxid, 12-16% Aluminiumoxid, 16-25% Calciumoxid, 0-10% Borax, 0-5% Magnesiumoxid, 0-2% Alkalioxide, 0-1,5% Titandioxid und 0-0,3% Eisenoxid; bevorzugt haben sie eine Dichte von 2,58±0,04 g/cm³, einen Zug-E-Modul von 70-75 GPa, eine Zugfestigkeit von 3000-3500 MPa und eine Reißdehnung von 4,5-4,8%),
- A-Glasfasern (63-72% Siliciumdioxid, 6-10% Calciumoxid, 14-16% Natrium- und Kaliumoxid, 0-6% Aluminiumoxid, 0-6% Boroxid, 0-4% Magnesiumoxid),
- C-Glasfasern (64-68% Siliciumdioxid, 11-15% Calciumoxid, 7-10% Natrium- und Kaliumoxid, 3-5% Aluminiumoxid, 4-6% Boroxid, 2-4% Magnesiumoxid),
- D-Glasfasern (72-75% Siliciumdioxid, 0-1% Calciumoxid, 0-4% Natrium- und Kaliumoxid, 0-1% Aluminiumoxid, 21-24% Boroxid), Basaltfasern (Mineralfaser mit der ungefähren Zusammensetzung: 52% SiO₂, 17% Al₂O₃, 9% CaO, 5% MgO, 5% Na₂O, 5% Eisenoxid sowie weiteren Metalloxiden),
- AR-Glasfasern (55-75% Siliciumdioxid, 1-10% Calciumoxid, 11-21% Natrium- und Kaliumoxid, 0-5% Aluminiumoxid, 0-8% Boroxid, 0-12% Titandioxid, 1-18% Zirkonoxid, 0-5% Eisenoxid),
- S-, HS- oder T-Glasfasern (58-70 Gew.-% Siliciumdioxid (SiO2), 15-30 Gew.-% Aluminiumoxid (Al₂O₃), 5-15 Gew.-% Magnesiumoxid (MgO), 0-10 Gew.-% Calciumoxid (CaO) und 0-2 Gew.-% weitere Oxide, wie z.B. Zirkoniumdioxid (ZrO₂), Boroxid (B₂O₃), Titandioxid (TiO₂) oder Lithiumoxid (Li₂O)) sowie Mischungen davon.

Alternativ und ebenso bevorzugt können die Glasfasern auch als Endlosfasern vorliegen, derartige Endlosfasern werden auch fachmännisch als Rovings bezeichnet. Bevorzugt haben die Endlosfasern einen runden Querschnitt und einen Durchmesser im Bereich von 10 bis 20 µm, insbesondere 12-17 µm. Ebenso sind Ausführungsformen denkbar, bei denen sowohl Endlosfasern als auch Kurzfasern enthalten sind.

Vorzugsweise können auch Fasern, bevorzugt Glasfasern mit nicht-kreisförmigen Querschnitt (flache Glasfasern), insbesondere ovale, elliptische, cocoon-artige (zwei oder mehrere runde Glasfasern sind längsseitig miteinander verbunden) oder rechteckige oder nahezu rechteckige Glasfasern, in den erfindungsgemäßen Formmassen eingesetzt werden.

Glasfasern mit nicht-kreisförmigem Querschnitt (flache Glasfasern) haben bevorzugt eine Dimensionierung der Hauptquerschnittachse im Bereich von 10 bis 35 µm, insbesondere im Bereich 18 bis 32 µm und eine Länge der Nebenquerschnittsachse im Bereich von 3 bis 15 µm, insbesondere im Bereich von 4 bis 10 µm.

Diese Formmassen zeigen dann Vorteile hinsichtlich der Steifigkeit und Festigkeit, insbesondere in Querrichtung, bei den aus den Formmassen hergestellten Formteilen. Die vorzugsweise eingesetzten flachen Glasfasern (Komponente (B)) sind Kurzglasfasern (Schnittglas) mit flacher Gestalt und einer nicht kreisförmigen Querschnittfläche, wobei das Verhältnis der senkrecht aufeinander stehenden Querschnittsachsen größer oder gleich 2 ist, und die kleinere Querschnittsachse eine Länge von ≥ 4 µm aufweist. Es wird insbesondere eine im Querschnitt möglichst rechteckige Glasfaser bevorzugt. Die Glasfasern liegen in Form von Schnittglas mit einer Länge von 2 bis 50 mm vor. Diese Glasfasern weisen bevorzugte Durchmesser der kleinen Querschnittsachse von 4 bis 10 µm und einen Durchmesser der großen Querschnittsachse von 8 bis 30 µm auf, wobei das Verhältnis der senkrecht aufeinander stehenden Querschnittsachsen (Verhältnis von Haupt- zur Nebenquerschnittsachse) zwischen 2 und 6, bevorzugt zwischen 2,5 und 5 und ganz besonders bevorzugt bei 2,8 bis 4,5 liegt.

Die Glasfasern können teilweise oder ganz durch Whisker ersetzt werden. Unter Whisker sind nadelförmige Kristalle, insbesondere Einkristalle aus Metallen, Oxiden, Boriden, Carbiden, Nitriden, Polytitanat, Kohlenstoff usw. mit meist polygonalem Querschnitt zu verstehen, z. B. Kaliumtitanat-, Aluminiumoxyd-, Siliciumcarbid-Whiskers. Whisker weisen im Allgemeinen einen Durchmesser von 0,1 bis 10 µm und eine Länge im mm- bis cm-Bereich auf. Gleichzeitig weisen sie eine hohe Zugfestigkeit auf. Hergestellt werden können Whiskers durch Abscheidung aus der Gasphase am Festkörper (VS Mechanismus) oder aus einem Dreiphasensystem (VLS-Mechanismus).

Die erfindungsgemäßen Formmassen können allein oder zusammen mit anderen Verstärkungsfasern auch Kohlenstofffasern enthalten. Kohlenstofffasern, auch Karbonfasern bzw. Kohlefasern genannt, sind industriell hergestellte Verstärkungsfasern aus kohlenstoffhaltigen Ausgangsmaterialien, die durch Pyrolyse (Oxidation und Carbonisation) in graphitartig angeordneten Kohlenstoff umgewandelt werden. Anisotrope Kohlenstofffasern zeigen hohe Festigkeiten und Steifigkeiten bei gleichzeitig geringer Bruchdehnung in axialer Richtung.

Üblicherweise werden Kohlenstofffasern hergestellt, indem eine geeignete Polymerfaser aus Polyacrylnitril, Pech oder Rayon wechselnden kontrollierten Bedingungen von Temperatur und Atmosphäre ausgesetzt wird. Beispielsweise können Kohlenstoff-Fasern durch Stabilisierung von PAN-Fäden oder - Geweben in oxidativer Atmosphäre bei 200 bis 300°C und anschließender Carbonisierung in inerter Atmosphäre oberhalb 600°C hergestellt werden. Derartige Verfahren sind Stand der Technik und beispielsweise beschrieben in H. Heißler, "Verstärkte Kunststoffe in der Luft- und Raumfahrt", Verlag W. Kohlhammer, Stuttgart, 1986.

Kohlenstofffaserbündel bestehen aus mehreren hundert bis hunderttausend Kohlenstofffasern, den sogenannten Einzelfilamenten, die einem Durchmesser von 5 bis 9 µm, eine Zugfestigkeit von 1000 bis 7000 MPa und einen Elastizitätsmodul von 200 bis 700 GPa aufweisen. Üblicherweise werden 1'000 bis 24'000 Einzelfilamente zu einem Multifilamentgarn (endloses Kohlenstofffaserbündel, Roving) zusammengefasst, das aufgespult wird. Die Weiterverarbeitung zu textilen Halbzeugen wie z. B. Geweben, Geflechten oder Multiaxialgelegen erfolgt auf Webmaschinen, Flechtmaschinen oder Multiaxial-Wirkmaschinen bzw. im Bereich der Herstellung von faserverstärkten Kunststoffen direkt auf Prepreganlagen, Strangziehanlagen (Pultrusionsanlagen) oder Wickelmaschinen. Als Kurzschnittfasern können sie Polyketonen beigemischt und über Extruder- und Spritzgussanlagen zu Kunststoffbauteilen verarbeitet werden.

Teilchenförmige Füllstoffe der Komponente (B) sind bevorzugtermaßen auf mineralischer Basis, insbesondere bevorzugt auf Basis von Talk, Glimmer, Silikat, Quarz, Titandioxid, Wollastonit, Kaolin, amorphen Kieselsäuren, Magnesiumcarbonat, Magnesiumhydroxid, Kreide, Kalk, Feldspat, Voll- oder Hohl-Glaskugeln oder gemahlenem Glas, Glasflakes, dauerhaft magnetische bzw. magnetisierbare Metallverbindungen und/oder Legierungen, Pigmente, insbesondere Bariumsulfat, Titandioxid, Zinkoxid, Zinksulfid, Eisenoxid, Kupferchromit, oder Mischungen davon ausgewählt sind. Die Füllstoffe können auch oberflächenbehandelt sein.

### Komponente (C):

Die erfindungsgemäße Formmasse enthält weiterhin 0,1 - 6 Gew.-%, bevorzugt 0,2 - 4 Gew.-%, weiter bevorzugt 0,3 - 3 Gew.-% und insbesondere 0,8 - 3 Gew.-% einer phosphorhaltigen Verbindung als Komponente (C).

Die Komponente (C) ist bevorzugt zu 0,10 bis 6,00 Gew.-% in der Formmasse enthalten und besteht bevorzugt entweder aus
0,10 - 6,00 Gew.-% Phosphinsäure oder Diphosphinsäure oder einem Metallsalz dieser Phosphinsäuren (Komponente C1), oder
0,10 - 2,00 Gew.-% eines organischen Phosphits oder Phosphonits (Komponente C2), oder
0,10 - 6,00 Gew.-% einer Mischung aus einer Phosphinsäure oder Diphosphinsäure oder einem Metallsalz dieser Phosphinsäuren (Komponente C1) und eines organischen Phosphits oder Phosphonits (Komponente C2), wobei die Mischung zu 0,05 - 2,00 Gew.-% aus Komponente C2 und zu 0,05 - 5,95 Gew.-% aus Komponente C1 besteht.

Für den Fall, dass die Komponente (C) ausschließlich aus organischen Phosphiten oder Phosphoniten besteht (Komponente (C2)), ist die Obergrenze des Gesamtgehaltes der Komponente (C) insgesamt somit auf 2 Gew.-% limitiert.

In einer bevorzugten Ausführungsform ist die Komponente (C) zu 0,20 bis 4,00 Gew.-% in der Formmasse enthalten und besteht bevorzugt entweder aus 0,20 - 4,00 Gew.-% Phosphinsäure oder Diphosphinsäure oder einem Metallsalz dieser Phosphinsäuren (Komponente C1), oder
0,20 - 2,00 Gew.-% eines organischen Phosphits oder Phosphonits (Komponente C2), oder
0,20 - 4,00 Gew.-% einer Mischung aus einer Phosphinsäure oder Diphosphinsäure oder einem Metallsalz dieser Phosphinsäuren (Komponente C1) und eines organischen Phosphits oder Phosphonits (Komponente C2), wobei die Mischung zu 0,10 - 2,00 Gew.-% aus Komponente C2 und zu 0,10 - 5,90 Gew.-% aus Komponente C1 besteht.

In einer weiteren bevorzugten Ausführungsform ist die Komponente (C) zu 0,30 bis 3,00 Gew.-% in der Formmasse enthalten und besteht bevorzugt entweder aus
0,30 - 3,00 Gew.-% Phosphinsäure oder Diphosphinsäure oder einem Metallsalz dieser Phosphinsäuren (Komponente C1), oder
0,30 - 1,00 Gew.-% eines organischen Phosphits oder Phosphonits (Komponente C2), oder
0,30 - 3,00 Gew.-% einer Mischung aus einer Phosphinsäure oder Diphosphinsäure oder einem Metallsalz dieser Phosphinsäuren (Komponente C1) und eines organischen Phosphits oder Phosphonits (Komponente C2), wobei die Mischung zu 0,10 - 1,00 Gew.-% aus Komponente C2 und zu 0,20 - 2,90 Gew.-% aus Komponente C1 besteht.

Insbesondere bevorzugt ist es, wenn die Komponente (C) zu 0,80 bis 3,00 Gew.-% in der Formmasse enthalten ist und damit bevorzugt entweder aus 0,80 - 3,00 Gew.-% Phosphinsäure oder Diphosphinsäure oder einem Metallsalz dieser Phosphinsäuren (Komponente C1), oder
0,80 - 3,00 Gew.-% einer Mischung aus einer Phosphinsäure oder Diphosphinsäure oder einem Metallsalz dieser Phosphinsäuren (Komponente C1) und eines organischen Phosphits oder Phosphonits (Komponente C2), wobei die Mischung zu 0,10 - 1,00 Gew.-% aus Komponente C2 und zu 0,70 - 2,90 Gew.-% aus Komponente C1 besteht.

Alle für C, C1 und C2 genannten Konzentrationsangaben sind jeweils bezogen auf die Polyketonformmasse bzw. die Summe von A bis D.

Erfindungsgemäß ist die Komponente (C1) eine Phosphinsäure (M = H⁺) oder ein Phosphinsäuresalz (M = Metallkation) der allgemeinen Formel (I) und/oder Formel (II) und/oder deren Polymere: 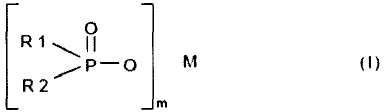 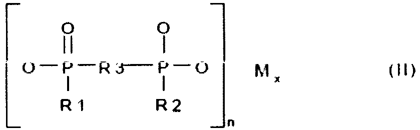 wobei
- R1, R2: gleich oder verschieden sind und bevorzugt C1-C8-Alkyl, linear oder verzweigt, gesättigt, ungesättigt, oder teilweise ungesättigt und/oder Aryl sind;
- R3: C1-C10-Alkylen, linear oder verzweigt, gesättigt, ungesättigt, oder teilweise ungesättigt, C6-C10-Arylen, Alkylarylen oder Arylalkylen sind;
- M: ein Wasserstoffion (Proton) oder ein Metallion aus der 2. oder 3. Haupt- oder Nebengruppe des Periodensystems ist, bevorzugt Aluminium, Barium, Calcium und/oder Zink; und m = 2 oder 3; n = 1 oder 3; x = 1 oder 2.

Als Metallion M werden bevorzugt Aluminium, Barium, Calcium, Magnesium und Zink verwendet.

Geeignete Phosphinsäuren als Komponente (C1) sowie für die Herstellung der erfindungsgemäßen Phosphinsäuresalze (Komponente C1) sind beispielsweise Dimethylphosphinsäure, Ethylmethylphosphinsäure, Diethylphosphinsäure, Methyl-n-propylphosphinsäure, Methan-di(methylphosphinsäure), Ethan-1,2-di(methyl-phosphinsäure), Hexan-1,6-di(methylphosphinsäure), Benzol-1,4-di(methylphosphinsäure), Methyl-phenyl-phosphinsäure, Diphenylphosphinsäure. Die Phosphinsäuresalze können z.B. hergestellt werden, indem die Phosphinsäuren in wässriger Lösung mit Metallcarbonaten, Metallhydroxiden oder Metalloxiden umgesetzt werden, wobei im Wesentlichen monomere, je nach Reaktionsbedingungen unter Umständen auch polymere Phosphinsäuresalze entstehen.

Besonders bevorzugt als Komponente C1 werden die Aluminium-, Calcium- und Zinksalze der oben angegebenen Phosphinsäuren. Insbesondere bevorzugt wird Aluminium-tris-diethylphophinat.

Bevorzugte organische Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis-(2,4,6-tris-(tert-butylphenyl))pentaerythritol-diphosphit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenylphosphit und Tris(2,4-di-tert-butylphenyl)phosphit.

Insbesondere werden bevorzugt Bis(2,6-di-t-butyl-4-methylphenyl)-pentaerythritol diphosphite, Tris[2-tert-butyl-4-thio(2'-methyl-4'-hydroxy-5'-tert-butyl)-phenyl-5-methyl] phenylphosphit, Tris(2,4-di-tert-butylphenyl)-phosphit und Tetrakis(2,4-di-t-butylphenyl)-4,4'-biphenylen diphosphonit (Sandostab P-EPQ", hergestellt von Clariant).

### Komponente (D):

Als Komponente (D) enthalten die Formmassen 0 - 20 Gew.-%, bevorzugt 0 - 10 Gew.-%, weiter bevorzugt 0,1 - 6 Gew.-% und besonders bevorzugt 0,2 bis 3 Gew.-% wenigstens eines Additivs oder Verarbeitungshilfsmittels.

Hierbei ist hervorzuheben, dass die Additive der Komponente (D) verschieden sind von den anderen Komponenten (A)-(C).

Die Formmassen können Stabilisatoren (Hitze- und Lichtstabilisatoren, Antioxidantien) Verarbeitungshilfsmittel und weitere Polymere, insbesondere Polyolefine, säure- oder anhydrid-modifizierte Polyolefine, Polyester, Polyamide, insbesondere aliphatische Polyamide, Schlagzähmodifikatoren und weitere Additive enthalten.

Bei der Komponente (D) handelt es sich normalerweise generell um Additive und/ oder weitere Polymere beispielsweise ausgewählt aus der folgenden Gruppe: Schlagzähmodifikatoren, Haftvermittler, Kristallisations-Beschleuniger oder -Verzögerer, Fließhilfsmittel, Gleitmittel, Entformungsmittel, Weichmacher, Stabilisatoren, insbesondere UV- und Hitzestabilisatoren, Anitoxidantien, Radikalfänger, Verarbeitungshilfsmittel, Antistatika, Farb- und Markierungsstoffe, Nanoteilchen in Plättchenform, Schichtsilikate, Leitfähigkeitsadditive, wie Ruß, Graphitpulver oder Kohlenstoffnanofibrillen, Residuen aus Polymerisationsverfahren wie Katalysatoren, Salze und deren Derivate, sauerstoff-, stickstoff- oder schwefelhaltigen Metallverbindungen sowie Regler wie z.B. Monosäuren oder Monoamine.

Bevorzugte sauerstoff-, stickstoff- oder schwefelhaltige Metallverbindungen innerhalb der Komponente (D) beruhen vornehmlich auf den Metallen Aluminium, Calcium, Magnesium und Zink. Geeignete Verbindungen sind ausgewählt aus der Gruppe der Oxide, Hydroxide, Carbonate, Silikate, Borate, Phosphate, Stannate sowie Kombinationen oder Mischungen dieser Verbindungen, wie z.B. Oxid-Hydroxide oder Oxid-Hydroxid-Carbonate. Beispiele sind Magnesiumoxid, Calciumoxid, Aluminiumoxid, Zinkoxid, Aluminiumhydroxid, Böhmit, Pseudo-Böhmit, Bayerit, Dihydrotalcit, Hydrocalumit, Calciumhydroxid, Calciumhydroxylapatit, Zinnoxidhydrat, Zinkhydroxid, Zinkborat, Zinksulfid, Zinkphosphat, Calciumcarbonat, Calciumphosphat, Magnesiumcarbonat, basisches Zinksilikat, Zinkstannat, Bariumstearat, Calciumstearat, Zinkstearat, Magnesiumstearat, Kaliumpalmitat, Magnesiumbehenat.

Bevorzugt sind die erfindungsgemäßen Formmassen dabei jedoch frei von Maleinsäureanhydrid-gepfropften PE und/oder PP-Haftvermittlern.

Bevorzugt wird eine Polyketonformmasse bestehend aus
(A) 38 - 89,2 Gew.-% mindestens ein aliphatisches Polyketon;
(B) 10 - 60 Gew.-% Glasfasern, Kohlenstofffasern oder Mischungen davon;
(C) 0,8 - 6 Gew.-% mindestens einer phosphorhaltigen Verbindung, ausgewählt aus der Gruppe bestehend aus
   (C1) 0 - 6 Gew.-% mindestens einer Phosphinsäure oder mindestens einer Diphosphinsäure, einem Metallsalz und/oder einem organischen Derivat davon;
   (C2) 0 - 2 Gew.-% mindestens eines organischen Phosphits oder Phosphonits
   wobei zumindest eine der phosphorhaltigen Verbindungen (C1) und (C2) in der Polyketonformmasse vorhanden ist, so dass die Summe der phosphorhaltigen Verbindungen (C1) und (C2) zumindest 0,8 Gew.-% beträgt,
(D) 0,1 - 6 Gew.-% mindestens ein Additiv,
wobei die Summe aus (A) bis (D) 100 Gew.-% ergibt, die Gehaltsangaben für (A) bis (D) inklusive von (C1) und (C2) jeweils bezogen auf die Formmasse bzw. die Summe aus (A) bis (D) bezogen sind.

Dabei ist es insbesondere bevorzugt, wenn die Komponente (C) entweder aus 0,80 - 6,00 Gew.-% Phosphinsäure oder Diphosphinsäure oder einem Metallsalz dieser Phosphinsäuren (Komponente C1), oder
0,80 - 6,00 Gew.-% einer Mischung aus einer Phosphinsäure oder Diphosphinsäure oder einem Metallsalz dieser Phosphinsäuren (Komponente C1) und eines organischen Phosphits oder Phosphonits (Komponente C2), wobei die Mischung zu 0,10 - 2,00 Gew.-%, insbesondere zu 0,10 - 1,00 Gew.-% aus Komponente C2 und zu 0,70 - 5,90 Gew.-% aus Komponente C1 besteht.

Die Erfindung betrifft weiterhin auch Formkörper die Verwendung der oben beschriebenen Formmassen zur Herstellung von thermoplastisch verarbeitbaren Formartikeln sowie aus den erfindungsgemäßen Zusammensetzungen erhältlichen Formartikel.

Beispiele derartiger Formartikel schließen ein: Gehäuse und Funktionsteile für Pumpen, Getriebe, Ventile und Wasserzähler, Drosselklappen, Zylinder, Kolben, Scheinwerfergehäuse, Reflektoren, Kurvenlichtverstellung, Zahnräder, Motor- und Getriebelager, Steckverbindungen, Konnektoren, Profile, Folien oder Schichten von Mehrschichtfolien, Fasern, elektronische Bauteile, insbesondere Bauteile für tragbare elektronische Geräte, Gehäuse für elektronische Bauteile, Konnektoren, Mobiltelefongehäuse, Komponenten für LED-Gehäuse, Gehäuse oder Gehäuseteile für Personalcomputer, insbesondere Notebook-Gehäuse, Werkzeuge, Verbundwerkstoffe, Fluid führende Leitungen und Behälter, insbesondere im Automobilbereich, glatte und gewellte Mono- oder Mehrschichtrohre, Rohrabschnitte, Stutzen, Fittings zum Verbinden von Schläuchen, Wellrohren und medienführenden Leitungen, Bestandteil von Mehrschichtleitungen (Innen-, Außen- oder Zwischenschicht), einzelne Schichten bei Mehrschichtbehältern, Hydraulikleitungen, Bremsleitungen, Kupplungsleitungen, Kühlflüssigkeitsleitungen, Bremsflüssigkeitsbehälter, etc.

Die Formartikel sind durch die Verfahren Spritzguss, Extrusion oder Blasformen herstellbar.

### Beschreibung bevorzugter Ausführungsformen:

Bevorzugte Ausführungsformen der Erfindung werden im Folgenden anhand der Ausführungsbeispiele beschrieben, die lediglich zur Erläuterung dienen und nicht einschränkend auszulegen sind.

### Herstellung der Polyketonformmassen:

Die Rohstoffe der Komponenten (A), (C) und (D) werden vorgemischt und gravimetrisch in den Einzug eines Zweiwellenextruder vom Typ ZSK25 (Werner u. Pfleiderer) dosiert. Komponente (B) wird über einen Sidefeeder 4 Gehäuseeinheiten vor dem Austrag in die Schmelze dosiert. Es wird bei Zylindertemperaturen von 200 - 270° C bei einer Schneckendrehzahl von 200 rpm und einem Durchsatz von 10 kg/h gearbeitet. Der Compound wird über eine Düse ausgetragen und nach Abkühlen des Strangs granuliert. Anschließend wird bei 100 °C 24 h im Vakuum getrocknet.

### Herstellung der Formkörper:

Die Herstellung der Formkörper erfolgt auf einer Spritzgussmaschine Arburg Allrounder 420C-1000-250 mit ansteigendem Zylindertemperaturprofil im Bereich von 200 - 270°C und Einspritzdrücken von 1000 - 1800 bar. Die Formtemperatur beträgt 80 °C. Die Geometrie der Formkörper entspricht den Vorgaben der entsprechenden Prüfnormen.

### Folgende Materialien wurden eingesetzt:

| | |
|---|---|
| PK-EP (TV): | Tiefviskoses aliphatisches Polyketon aus Kohlenmonoxid, Ethylen und Propylen mit Schmelzpunkt von 220°C, MFR (240°C, 2,16kg) von 60g/10min, Hyosung Co. Ltd. |
| PK-EP (HV): | Hochviskoses aliphatisches Polyketon aus Kohlenmonoxid, Ethylen und Propylen mit Schmelzpunkt von 220°C, MFR (240°C, 2,16kg) von 6g/10min, Hyosung Co. Ltd. |
| PA12: | Polyamid PA12, Lösungsviskosität von ηrel = 1,95 (0,5 g Polymer gelöst in 100 ml m-Kresol, 20°C), Schmelzpunkt von 178°C, EMS-CHEMIE AG. |
| Polybond 3002: | Maleinsäureanhydrid-modifiziertes Polypropylen, BP Performance Polymers Inc. |
| Exolit OP1230: | Aluminium-tris-diethylphophinat, Clariant, CH |
| Magnifin H10 IV: | Hochreines Magnesiumhydroxid, Albemarle |
| Glasfaser: | Glasfaser mit rundem Querschnitt für Polyamide, Faserlänge 4,5 mm, Durchmesser 10 µm, Vetrotex |
| Sandostab P-EPQ | Tetrakis(2,4-di-t-butylphenyl)-4,4'-biphenylen-diphosphonit (CAS: 38613-77-3), Clariant |
| Stabilisator: | Irganox 1010, sterisch gehindertes phenolisches Antioxidans (BASF SE) |

Die Zusammensetzungen der Formmassen und die Eigenschaften der daraus hergestellten Formkörper nach der Erfindung sind in den Tabelle 1 zusammengefasst, Vergleichsbeispiele sind in Tabelle 2 angegeben.

**Tabelle 1: Beispiele B1 - B6 nach der Erfindung:**

| | | B1 | B2 | B3 | B4 | B5 | B6 |
|---|---|---|---|---|---|---|---|
| PK-EP (TV) | G-% | 69,3 | 68,3 | 48,45 | 38,45 | 64,3 | 67,3 |
| Glasfasern | G-% | 30,0 | 30,0 | 50,0 | 60,0 | 30,0 | 30,0 |
| Sandostab P-EPQ | G-% | 0,2 | 0,2 | 0,15 | 0,15 | 0,2 | 0,2 |
| Exolit OP1230 | G-% | | 1,0 | 1,0 | 1,0 | 5,0 | 2,0 |
| Irganox 1010 | G-% | 0,5 | 0,5 | 0,4 | 0,4 | 0,5 | 0,5 |

| Eigenschaften | | | | | | | |
|---|---|---|---|---|---|---|---|
| E-Modul | MPa | 8400 | 8500 | 13800 | 16300 | 9000 | 8400 |
| Bruchfestigkeit | MPa | 135 | 136 | 175 | 173 | 137 | 139 |
| Bruchdehnung | % | 3,5 | 5 | 3,2 | 3,1 | 5,2 | 5,3 |
| Schlag 23°C | kJ/m² | 72 | 93 | 77 | 65 | 85 | 95 |
| Schlag -30°C | kJ/m² | 66 | 87 | 64 | 64 | 84 | 85 |
| Kerbschlag 23°C | kJ/m² | 16 | 14 | 18 | 17 | 14 | 17 |
| Kerbschlag -30°C | kJ/m2 | 11 | 11 | 14 | 12 | 10 | 12 |
| HDTA (1.80 MPa) | °C | 207 | 204 | 212 | 212 | 205 | 208 |
| HDTC (8.00 MPa) | °C | 158 | 143 | 185 | 183 | 155 | 164 |
| MVR (250°C/21.6kg) | cm3/10 min | 152 | 126 | 78 | 5 | 86 | 115 |

| | | | | | | | |
|---|---|---|---|---|---|---|---|
| G-% = Gew.-% (Gewichtsprozent) | | | | | | | |

**Tabelle 2: Vergleichsbeispiele VB1 - VB7**

| | | VB1 | VB2 | VB3 | VB4 | VB5 | VB6 | VB7 |
|---|---|---|---|---|---|---|---|---|
| PK-EP (TV) | G-% | 69,5 | 49,5 | 68,5 | 64,5 | 34,7 | 64,6 | 64,0 |
| PK-EP (HV) | G-% | | | | | 34,8 | | |
| Polybond 3002 | G-% | | | | | | 5,0 | |
| PA12 | G-% | | | | | | | 5,0 |
| Glasfasern | G-% | 30,0 | 50,0 | 30,0 | 30,0 | 30,0 | 30,0 | 30,0 |
| Exolit OP1230 | G-% | | | | | | | |
| Magnifin H10 IV | G-% | | | 1 | 5 | | | |
| Stabilisator | G-% | 0,5 | 0,5 | 0,5 | 0,5 | 0,5 | 0,4 | 0,5 |

| Eigenschaften | | | | | | | | |
|---|---|---|---|---|---|---|---|---|
| E-Modul | MPa | 8500 | 13700 | 8500 | 8600 | 8200 | 8300 | 6700 |
| Bruchfestigekeit | MPa | 112 | 105 | 110 | 105 | 99 | 96 | 103 |
| Bruchdehnung | % | 2,6 | 1,3 | 2,8 | 3,0 | 2,4 | 2,8 | 5,8 |
| Schlag 23°C | kJ/m² | 52 | 34 | 50 | 55 | 40 | 32 | 84 |
| Schlag -30°C | kJ/m² | 40 | 30 | 40 | 39 | 39 | 28 | 82 |
| Kerbschlag 23°C | kJ/m² | 12 | 11 | 11 | 11 | 13 | 11 | 17 |
| Kerbschlag -30°C | kJ/m² | 9 | 9 | 9 | 9 | 9 | 9 | 11 |
| HDTA (1.80 MPa) | °C | 204 | 212 | 204 | 201 | 205 | 155 | 207 |
| HDTC (8.00 MPa) | °C | 162 | 183 | 160 | 141 | 137 | 103 | 149 |
| MVR (250°C/21.6kg) | cm³/10 min | 326 | 98 | 253 | 235 | 97 | 590 | 65 |

| | | | | | | | | |
|---|---|---|---|---|---|---|---|---|
| G-% = Gew.-% (Gewichtsprozent) | | | | | | | | |

Die Messungen wurden nach folgenden Normen und an folgenden Prüfkörpern im trockenen Zustand durchgeführt. D.h. die Prüfkörper werden nach dem Spritzguss mindestens 48 h bei Raumtemperatur in trockener Umgebung, über Silicagel, gelagert, bevor sie den Prüfungen zugeführt werden.

Das thermische Verhalten (Schmelzpunkt (TM), Schmelzenthalpie (ΔHm), Glasumwandlungstemperatur (Tg)) wurde anhand der ISO-Norm 11357 (11357-2 für die Glasübergangstemperatur, 11357-3 für die Schmelztemperatur und die Schmelzenthalpie) am Granulat bestimmt. Die Differential Scanning Calorimetry (DSC) wurde mit Aufheizrate von 20 °C/min durchgeführt.

Die relative Viskosität (ηrel) wurde bestimmt nach DIN EN ISO 307 an Lösungen von 0,5 g Polymer gelöst in 100 ml m-Kresol bei einer Temperatur von 20°C. Als Probe wird Granulat verwendet.

Zug-E-Modul, Bruchfestigkeit und Bruchdehnung: Zug-E-Modul, Bruchfestigkeit und Bruchdehnung wurden nach ISO 527 mit einer Zuggeschwindigkeit von 1mm/min (Zug-E-Modul) bzw. mit einer Zuggeschwindigkeit von 5 mm/min (Bruchfestigkeit, Bruchdehnung) am ISO-Zugstab, Norm ISO/CD 3167, Typ Al, 170 x 20/10 x 4mm bei Temperatur 23°C bestimmt.

Schlagzähigkeit und Kerbschlagzähigkeit nach Charpy wurden nach ISO 179/keU bzw. ISO 179/keA am ISO-Prüfstab, Norm ISO/CD 3167, Typ B1, 80 x 10 x 4mm bei einer Temperatur von 23°C gemessen.

Der MVR (Schmelze-Volumenfließrate oder Melt Volume-flow Rate) wird nach ISO 1133 mittels eines Kapillarrheometers ermittelt, wobei das Material (Granulat) in einem beheizbaren Zylinder bei einer Temperatur von 250°C aufgeschmolzen und unter einem durch die Auflagelast von 21,6 kg entstehenden Druck durch eine definierte Düse (Kapillare) gedrückt wird. Ermittelt wird das austretende Volumen der Polymerschmelze als Funktion der Zeit.
Die Wärmeformbeständigkeit in Form von HDT A (1,80 MPa) und HDT C (8,00 MPa) wurde gemäß ISO 75-1 und ISO 75-2 an ISO-Schlagstäben der Dimension 80x10x4 mm (Probekörper in Flachkant-Position), bestimmt.

Durch die erfindungsgemäße Verwendung von Komponente (C) konnten die mechanischen Eigenschaften, insbesondere die Bruchfestigkeit, die Bruchdehnung sowie die Schlag- und Kerbschlagzähigkeit deutlich verbessert werden.

Dabei werden signifikant höhere Eigenschaftsverbesserungen erreicht, als bei Verwendung von üblichen Haftvermittlern, wie z.B. Maleinsäureanhydrid-gepfropften Polyolefinen (VB6). Durch Zugabe von aliphatischem Polyamid, wie z.B. PA12, wird zwar die Zähigkeit und die Bruchdehnung erhöht, aber gleichzeitig Steifigkeit und Bruchfestigkeit reduziert (VB7). Nur die erfindungsgemäße Verwendung der Komponente C erlaubt die gleichzeitige Verbesserung von Zähigkeit, Bruchdehnung und Bruchfestigkeit ohne dass die Steifigkeit reduziert wird.

## Patentansprüche

1. Polyketonformmasse, enthaltend oder bestehend aus
(A) 25 - 99,9 Gew.-% mindestens ein aliphatisches Polyketon;
(B) 0 - 70 Gew.-% Füll- oder Verstärkungsstoffe;
(C) 0,1 - 6 Gew.-% mindestens einer phosphorhaltigen Verbindung, ausgewählt aus der Gruppe bestehend aus
- 0,1 - 6 Gew.-% mindestens einer Phosphinsäure oder mindestens einer Diphosphinsäure, einem Metallsalz und/oder einem organischen Derivat davon (Komponente C1); oder
- 0,1 - 2 Gew.-% mindestens eines organischen Phosphits oder Phosphonits (Komponente C2), oder
- 0,1 - 6 Gew.-% einer Mischung aus einer Phosphinsäure oder einer Diphosphinsäure oder einem Metallsalz dieser Phosphinsäuren (Komponente C1) und eines organischen Phosphits oder Phosphonits (Komponente C2), wobei die Mischung zu 0,05 - 2 Gew.-% aus Komponente C2 und zu 0,05 bis 5,95 Gew.-% aus Komponente C1 besteht,
wobei zumindest eine der phosphorhaltigen Verbindungen (C1) und (C2) in der Polyketonformmasse vorhanden ist, so dass die Summe der phosphorhaltigen Verbindungen (C1) und (C2) zumindest 0,1 Gew.-% beträgt,
(D) 0 - 20 Gew.-% mindestens ein Additiv,
wobei die mindestens eine Phosphinsäure sowie die hiervon abgeleiteten Metallsalze die nachfolgend abgebildete allgemeine Formel I aufweisen bzw. die mindestens eine Diphosphinsäure sowie die hiervon abgeleiteten Metallsalze die nachfolgend abgebildete allgemeine Formel II aufweisen 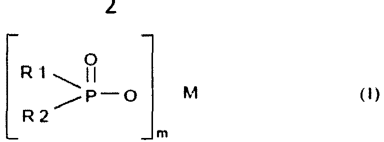 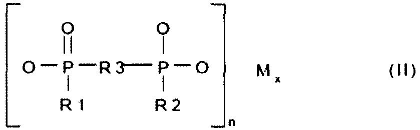 wobei
R1, R2 gleich oder verschieden sind und bevorzugt C1-C8-Alkyl, linear oder verzweigt, gesättigt, ungesättigt, oder teilweise ungesättigt und/oder Aryl sind;
R3 C1-C10-Alkylen, linear oder verzweigt, gesättigt, ungesättigt, oder teilweise ungesättigt, C6-C10-Arylen, Alkylarylen oder Arylalkylen sind;
M ein Wasserstoffion (Proton) oder ein Metallion aus der 2. oder 3. Haupt- oder Nebengruppe des Periodensystems ist, bevorzugt Aluminium, Barium, Calcium, Magnesium und/oder Zink; und m = 2 oder 3; n = 1 oder 3; x = 1 oder 2, und
wobei die Summe aus (A) bis (D) 100 Gew.-% ergibt, die Gehaltsangaben für (A) bis (D) inklusive von (C1) und (C2) jeweils bezogen auf die Formmasse bzw. die Summe aus (A) bis (D) bezogen sind und wobei bevorzugt die Formmasse ausschliesslich aus den Komponenten (A) bis (D) besteht.

2. Polyketonformmasse nach Anspruch 1, **dadurch gekennzeichnet, dass** jeweils unabhängig voneinander oder in Kombination miteinander der Gehalt
(A) des mindestens einen aliphatischen Polyketons 32 bis 89,7 Gew.-%, bevorzugt 41 bis 84,5 Gew.-% und ganz besonders bevorzugt 44 bis 79,5 oder 49 bis 69,5 Gew.-%,
(B) der Füll- oder Verstärkungsstoffe 10 bis 60 Gew.-%, bevorzugt zwischen 15 bis 55 Gew.-% oder 20 bis 50 Gew.-% und ganz besonders bevorzugt 30 bis 45 Gew.-%
(C) der mindestens einen phosphorhaltigen Verbindung 0,2 bis 4 Gew.-%, bevorzugt 0,3 bis 3 Gew.-% und ganz besonders bevorzugt 0,8 bis 3 Gew.-%, sowie
(D) des mindestens einen Additives 0,1 bis 6 Gew.-%, bevorzugt 0,2 bis 3 Gew.-%
beträgt.

3. Polyketonformmasse nach einem der vorhergehenden Ansprüche, dass das mindestens eine Polyketon (A) ein Polymerisat von Kohlenmonoxid und mindestens einer olefinisch ungesättigten Verbindung, bevorzugt ausgewählt aus der Gruppe bestehend aus Ethen und mindestens einer weiteren olefinisch ungesättigten Verbindung mit mindestens 3 bis bevorzugt 20 Kohlenstoffatomen wie z.B. Propen, 1-Buten, Isobuten, 1-Hexen, 1-Octen, 1-Dodecen, Styrol, p-Methylstyrol, p-Ethylstyrol, m-Isopropylstyrol sowie Mischungen oder Kombinationen hiervon; besonders bevorzugt ein Polymerisat von Kohlenmonoxid und Ethen oder ein Terpolymerisat von Kohlenmonoxid, Ethen und Propen oder 1-Buten, ist.

4. Polyketonformmasse nach einem der vorhergehenden Ansprüche, **dadurch gekennzeichnet, dass** das mindestens eine Polyketon (A) ein Terpolymerisat der nachfolgenden allgemeinen Formel ist 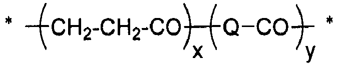 worin Q eine divalente Gruppe, abgeleitet von olefinsich ungesättigten Verbindungen mit mindestens 3 Kohlenstoffatomen ist und das molare Verhältnis y : x kleiner oder gleich 0,5, bevorzugt kleiner 0,2, insbesondere kleiner gleich 0,1 ist, insbesondere von 0,01 bis 0,1 beträgt.

5. Polyketonformmasse nach einem der vorhergehenden Ansprüche, **dadurch gekennzeichnet, dass** das mindestens eine aliphatische Polyketon
a) ein teilkristallines Polyketon, bevorzugt mit einer Schmelztemperatur, gemessen mittels DSC nach ISO 11357-3 bei einer Aufheizrate von 20 K/min im Bereich von 180 °C bis 280 °C, insbesondere von 200 bis 240 °C, ist,
b) eine Schmelzviskosität (MVR, melt volume-flow rate), bestimmt nach ISO 1133 bei 240°C und mit einer Auflage von 2,16 kg, im Bereich von 5 - 200 cm³/10min, insbesondere im Bereich 10 - 100 cm³/10min, ganz besonders bevorzugt im Bereich von 20 - 80 cm³/10min, aufweist,
c) eine relative Viskosität, gemessen an Lösungen von 0,5 g Polyketon gelöst in 100 ml m-Kresol bei 20°C mit einem Kapillarviskosimeter, von 1,5 bis 2,5, vorzugsweise von 1,6 bis 2,2 aufweist und/oder
d) eine zahlenmittlere Molmasse, bestimmt mittels GPC in Hexafluoroisopropanol relativ zu PMMA-Standards, im Bereich von 20'000 bis 100'000 g/mol, insbesondere von 30'000 bis 60'000 g/mol aufweist.

6. Polyketonformmasse nach einem der vorhergehenden Ansprüche, **dadurch gekennzeichnet, dass** die Füll- oder Verstärkungsstoffe ausgewählt sind aus der Gruppe bestehend aus faser- oder teilchenförmigen Füllstoffen oder deren Mischungen, die bevorzugt mit einer Schlichte und/oder einem Haftvermittler ausgerüstet sind.

7. Polyketonformmasse nach vorhergehendem Anspruch, **dadurch gekennzeichnet, dass** die faserförmigen Füllstoffe
a) ausgewählt sind aus der Gruppe bestehend aus Glasfasern, Kohlenstofffasern, Metallfasern, Aramidfasern, Basaltfasern und Whiskern sowie Mischungen oder Kombinationen hieraus,
b) in Form endloser Stränge und/oder in geschnittener Form, insbesondere in Form von Kurzglasfasern (Schnittglas) vorliegen, und/oder
c) kreisförmigen Querschnitt oder nicht-kreisförmigen Querschnitt aufweisen, wobei auch Mischungen von solchen Systemen eingesetzt werden können.

8. Polyketonformmasse nach Anspruch 6, **dadurch gekennzeichnet, dass** die teilchenförmigen Füllstoffe ausgewählt sind aus der Gruppe bestehend aus mineralischen teilchenförmigen Füllstoffen, bevorzugt Talk, Glimmer, Silikat, Quarz, Titandioxid, Wollastonit, Kaolin, amorphen Kieselsäuren, Magnesiumcarbonat, Magnesiumhydroxid, Kreide, Kalk, Feldspat, Voll- oder Hohl-Glaskugeln oder gemahlenem Glas, Glasflakes, dauerhaft magnetische bzw. magnetisierbare Metallverbindungen und/oder Legierungen, Pigmente, insbesondere Bariumsulfat, Titandioxid, Zinkoxid, Zinksulfid, Eisenoxid, Kupferchromit, Metallpulver, insbesondere Eisenpulver, oder Mischungen davon.

9. Polyketonformmasse nach einem der vorhergehenden Ansprüche, **dadurch gekennzeichnet, dass** das mindestens eine organische Phosphit oder Phosphonit (Komponenet C2) ausgewählt ist aus der Gruppe bestehend aus Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis-(2,4-di-tert-butylphenyl)-4,4'-biphenylendiphosphonit, 6-lsooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert- butyl-6-methylphenyl)methylphosphit und Bis(2,4-di-tert-butyl-6-methyl-phenyl)ethylphosphit. Insbesondere werden bevorzugt Tris[2-tert-butyl-4-thio(2'-methyl-4'-hydroxy-5'-tert-butyl)-phenyl-5-methyl]-phenyl-phosphit und Tris(2,4-di-tert-butylphenyl)phosphit.

10. Polyketonformmasse nach einem der vorhergehenden Ansprüche, **dadurch gekennzeichnet, dass** das mindestens eine Additiv (Komponente D) ausgewählt ist aus der Gruppe bestehend aus Stabilisatoren, insbesondere Hitze-, UV- und/oder Lichtstabilisatoren, Antioxidantien, Verarbeitungshilfsmitteln, von aliphatischen Polyketonen verschiedenen Polymeren, insbesondere Polyolefinen, säure- oder anhydrid-modifizierte Polyolefine, Polyester, Polyamide, insbesondere aliphatische Polyamide, Schlagzähmodifikatoren Haftvermittlern, Kristallisations-Beschleunigern oder -Verzögerern, Fließhilfsmitteln, Gleitmitteln, Entformungsmitteln, Weichmachern, Radikalfängern, Antistatika, Farb- und Markierungsstoffen, Nanoteilchen in Plättchenform, Schichtsilikate, Leitfähigkeitsadditive, wie Ruß, Graphitpulver oder Kohlenstoffnanofibrillen, Residuen aus Polymerisationsverfahren wie Katalysatoren, Salze und deren Derivate, sauerstoff-, stickstoff- oder schwefelhaltigen Metallverbindungen sowie Regler wie z.B. Monosäuren oder Monoamine sowie Mischungen oder Kombinationen hieraus.

11. Formkörper, hergestellt aus einer Polyketonformmasse nach einem der vorhergehenden Ansprüche, insbesondere in Form von Gehäusen, Funktionsteilen für Pumpen, Getriebe, Ventilen, Wasserzählern, Drosselklappen, Zylinder, Kolben, Scheinwerfergehäuse, Reflektoren, Kurvenlichtverstellungen, Zahnrädern, Motor- und Getriebelagern, Steckverbindungen, Konnektoren, Profilen, Folien oder Schichten von Mehrschichtfolien, Fasern, elektronischen Bauteilen, insbesondere Bauteilen für tragbare elektronische Geräte, Gehäusen für elektronische Bauteile, Konnektoren, Mobiltelefongehäusen, Komponenten für LED-Gehäuse, Gehäusen oder Gehäuseteilen für Personalcomputer, insbesondere Notebook-Gehäusen, Werkzeugen, Verbundwerkstoffen, Fluid führenden Leitungen und Behältern, insbesondere im Automobilbereich, glatte und gewellte Mono- oder Mehrschichtrohren, Rohrabschnitten, Stutzen, Fittings zum Verbinden von Schläuchen, Wellrohren und medienführenden Leitungen, Bestandteilen von Mehrschichtleitungen (Innen-, Außen- oder Zwischenschicht), einzelne Schichten bei Mehrschichtbehältern, Hydraulikleitungen, Bremsleitungen, Kupplungsleitungen, Kühlflüssigkeitsleitungen oder Bremsflüssigkeitsbehälter.

12. Verfahren zur Herstellung eines Formkörpers nach vorhergehendem Anspruch, mittels Spritzguss, Extrusion oder Blasformen.

## Claims

1. Polyketone moulding compound comprising or consisting of
(A) 25 - 99.9% by weight of at least one aliphatic polyketone;
(B) 0 - 70% by weight of filling- or reinforcing materials;
(C) 0.1 - 6% by weight of at least one phosphorus-containing compound, selected from the group consisting of
- 0.1 - 6% by weight of at least one phosphinic acid, of at least one diphosphinic acid, a metal salt of these phosphinic acids and/or an organic derivate thereof (component C1); or
- 0.1 - 2% by weight of an organic phosphite or phosphonite (component C2), or
- 0.1 - 6% by weight of a mixture of phosphinic acid or diphosphinic acid or a metal salt of these phosphinic acids (component C1) and an organic phosphite or phosphonite (component C2), the mixture consisting of 0.05 - 2% by weight of component C2 and 0.05 - 5.95% by weight of component C1.
wherein at least one of the phosphorus-containing compounds (C1) and (C2) is present in the polyketone moulding compound, so that the sum of the phosphorus-containing compounds (C1) and (C2) is at least 0.1% by weight,
(D) 0 - 20% by weight of at least one additive,
wherein the at least one phosphinic acid and also the metal salts derived herefrom have the subsequently illustrated general formula (I) or the at least one diphosphinic acid and the metal salts derived herefrom have the subsequently illustrated general formula (II) 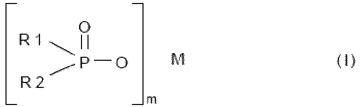 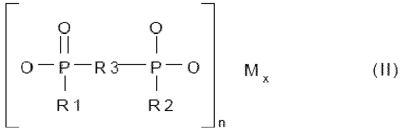 wherein
R1, R2 are the same or different and preferably are C1-C8 alkyl, linear or branched, saturated, unsaturated or partially unsaturated and/or aryl;
R3 is C1-C10 alkylene, linear or branched, saturated, unsaturated or partially unsaturated, C6-C10 arylene, alkylarylene or arylalkylene;
M is a hydrogen ion (proton) or a metal ion from the 2^{nd} or 3^{rd} main or subsidiary group of the periodic table, preferably aluminium, barium, calcium, magnesium and/or zinc; and m = 2 or 3; n = 1 or 3; x = 1 or 2.
the sum of (A) to (D) producing 100% by weight, the amounts for (A) to (D) including (C1) and (C2) respectively relating to the moulding compound or the sum of (A) to (D) and the moulding compound preferably consisting exclusively of components (A) to (D).

2. Polyketone moulding compound according to claim 1, **characterised in that**, respectively independently of each other or in combination with each other, the amount
(A) of the at least one aliphatic polyketone is 32 to 89.7% by weight, preferably 41 to 84.5% by weight and very particularly preferably 44 to 79.5 or 49 to 69.5% by weight,
(B) of the filling- or reinforcing materials is 10 to 60% by weight, preferably between 15 to 55% by weight or 20 to 50% by weight and very particularly preferably 30 to 45% by weight,
(C) of the at least one phosphorus-containing compound is 0.2 to 4% by weight, preferably 0.3 to 3% by weight and very particularly preferably 0.8 to 3% by weight, and
(D) of the at least one additive is 0.1 to 6% by weight, preferably 0.2 to 3% by weight.

3. Polyketone moulding compound according to one of the preceding claims, **characterised in that** the at least one polyketone (A) is a polymer of carbon monoxide and at least one olefinically unsaturated compound, preferably selected from the group consisting of ethene and at least one further olefinically unsaturated compound with at least 3 to preferably 20 carbon atoms, such as e.g. propene, 1-butene, isobutene, 1-hexene, 1-octene, 1-dodecene, styrene, p-methylstyrene, p-ethylstyrene, m-isopropylstyrene and also mixtures or combinations hereof; particularly preferably a polymer of carbon monoxide and ethene or a terpolymer of carbon monoxide, ethene and propene or 1-butene.

4. Polyketone moulding compound according to one of the preceding claims, **characterised in that** the at least one polyketone (A) is a terpolymer of the subsequent general formula 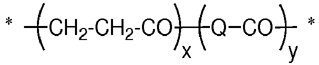 wherein Q is a divalent group, derived from olefinically unsaturated compounds with at least 3 carbon atoms, and the molar ratio y : x is less than or equal to 0.5, preferably less than 0.2, in particular less than or equal to 0.1, in particular is of 0.01 to 0.1.

5. Polyketone moulding compound according to one of the preceding claims, **characterised in that** the at least one aliphatic polyketone
a) is a partially crystalline polyketone, preferably with a melting temperature, measured by means of DSC according to ISO 11357-3 at a heating rate of 20 K/min, in the range of 180°C to 280°C, in particular of 200 to 240°C,
b) has a melt viscosity (MVR, melt volume-flow rate), determined according to ISO 1133 at 240°C and with a load of 2.16 kg, in the range of 5 - 200 cm³/10 min, in particular in the range of 10 - 100 cm³/10 min, very particularly preferably in the range of 20 - 80 cm³/10 min,
c) has a relative viscosity, measured on solutions of 0.5 g polyketone dissolved in 100 ml m-cresol at 20°C with a capillary viscometer, of 1.5 to 2.5, preferably of 1.6 to 2.2, and/or
d) has a number-average molar mass, determined by means of GPC in hexafluoroisopropanol relative to PMMA standards, in the range of 20,000 to 100,000 g/mol, in particular of 30,000 to 60,000 g/mol.

6. Polyketone moulding compound according to one of the preceding claims, **characterised in that** the filling- or reinforcing materials are selected from the group consisting of fibrous or particulate filling materials or the mixtures thereof, which are equipped preferably with a size and/or an adhesive.

7. Polyketone moulding compound according to the preceding claim, **characterised in that** the fibrous filling materials
a) are selected from the group consisting of glass fibres, carbon fibres, metal fibres, aramide fibres, basalt fibres and whiskers and also mixtures or combinations hereof,
b) are present in the form of endless strands and/or in cut form, in particular in the form of short glass fibres (cut glass), and/or
c) have a circular cross-section or a non-circular cross-section, also mixtures of such systems being able to be used.

8. Polyketone moulding compound according to claim 6, **characterised in that** the particulate filling materials are selected from the group consisting of mineral particulate filling materials, preferably talc, mica, silicate, quartz, titanium dioxide, wollastonite, kaolin, amorphous silicic acids, magnesium carbonate, magnesium hydroxide, chalk, lime, feldspar, solid or hollow glass balls or ground glass, glass flakes, permanently magnetic or magnetisable metal compounds and/or alloys, pigments, in particular barium sulphate, titanium dioxide, zinc oxide, zinc sulphide, iron oxide, copper chromite, metal powder, in particular iron powder, or mixtures thereof.

9. Polyketone moulding compound according to one of the preceding claims, **characterised in that** the at least one organic phosphite or phosphonite (component C2) is selected from the group consisting of triphenylphosphite, diphenylalkylphosphite, phenyldialkylphosphite, tris(nonylphenyl)phosphite, trilaurylphosphite, trioctadecylphosphite, distearylpentaerythritol diphosphite, tris(2,4-di-tert-butylphenyl)phosphite, diisodecylpentaerythritol diphosphite, bis(2,4-di-tert-butylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)pentaerythritol diphosphite, bis(2,4,6-tris-(tert-butylphenyl))pentaerythritol diphosphite, tristearylsorbitol triphosphite, tetrakis(2,4-di-tert-butylphenyl)-4,4'-biphenylene diphosphonite, 6-isooctyloxy-2,4,8, 10-tetra-tert-butyl-12H-dibenzo[d,g]-1,3,2-dioxaphosphocine, 6-fluoro-2,4,8,10-tetra-tert-butyl- 12-methyldibenzo[d,g]-1,3,2-dioxaphosphocine, bis(2,4-di-tert-butyl-6-methylphenyl)methylphosphite and bis(2,4-di-tert-butyl-6-methylphenyl)ethylphosphite) in particular, tris[2-tert-butyl-4-thio(2'-methyl-4'-hydroxy-5'-tert-butyl)-phenyl-5-methyl]phenylphosphite and tris(2,4-di-tert-butylphenyl)phosphite are preferred.

10. Polyketone moulding compound according to one of the preceding claims, **characterised in that** the at least one additive (component D) is selected from the group consisting of stabilisers, in particular heat-, UV- and/or light stabilisers, antioxidants, processing aids, polymers different from aliphatic polyketones, in particular, polyolefins, acid- or anhydride-modified polyolefins, polyesters, polyamides, in particular aliphatic polyamides, impact modifiers, adhesives, crystallisation accelerators or retarders, flow aids, lubricants, mould-release agents, plasticisers, radical collectors, antistatic agents, colouring- and marking substances, nanoparticles in lamellar form, layer silicates, conductivity additives, such as carbon black, graphite powder or carbon nanofibrils, residues from polymerisation processes, such as catalysts, salts and derivatives thereof, oxygen-, nitrogen- or sulphur-containing metal compounds and also regulators, such as e.g. monoacids or monoamines and also mixtures or combinations hereof.

11. Moulded articles, produced from a polyketone moulding compound according to one of the preceding claims, in particular in the form of housings, functional parts for pumps, transmissions, valves, water meters, throttle valves, cylinders, pistons, headlight housings, reflectors, bend-light adjustments, toothed wheels, engine- and transmission bearings, plug-in connections, connectors, profiles, foils or layers of multilayer foils, fibres, electronic components, in particular components for portable electronic devices, housings for electronic components, connectors, mobile telephone housings, components for LED housings, housings or housing parts for personal computers, in particular notebook housings, tools, composite materials, fluid-conducting pipes and containers, in particular in the automobile sphere, smooth and corrugated mono- or multilayer pipes, pipe sections, connection pieces, fittings for connecting hoses, corrugated pipes and media-conducting pipes, components of multilayer pipes (inner-, outer- or intermediate layer), individual layers in multilayer containers, hydraulic pipes, brake pipes, clutch pipes, coolant pipes or brake fluid containers.

12. Method for the production of a moulded article according to the preceding claim, by means of injection moulding, extrusion or blow-moulding.

## Revendications

1. Mélange à mouler de polycétone, contenant, ou en étant constitué de
(A) 25 à 99,9 % en poids d'au moins une polycétone aliphatique ;
(B) 0 à 70 % en poids de matières de charge ou de renforcement ;
(C) 0,1 à 6 % en poids d'au moins un composé phosphoré, choisi dans le groupe consistant en
- 0,1 à 6 % en poids d'au moins un acide phosphinique ou d'au moins un acide diphosphinique, d'un sel métallique et/ou d'un dérivé organique de ceux-ci (Composant C1) ; ou
- 0,1 à 2 % en poids d'au moins un phosphite ou d'un phosphonite organique (Composant C2), ou
- 0,1 à 6 % en poids d'un mélange d'un acide phosphinique ou d'un acide diphosphinique ou d'un métal de ces acides phosphiniques (Composant C1) et d'un phosphite ou d'un phosphonite organique (Composant C2), le mélange étant constitué de 0,05 à 2 % en poids du Composant C2 et de 0,05 à 5,95 % en poids du Composant C1,
au moins l'un des composés phosphorés (C1) et (C2) étant présent dans le mélange à mouler de polycétone de telle sorte que la somme des composés phosphorés (C1) et (C2) soit d'au moins 0,1 % en poids,
(D) 0 à 20 % en poids d'au moins un additif,
l'au moins un acide phosphinique, ainsi que les sels métalliques qui en dérivent, présentant la formule générale I représentée ci-après, l'au moins un acide diphosphinique, ainsi que les sels métalliques qui en dérivent, présentant la formule générale II représentée ci-après 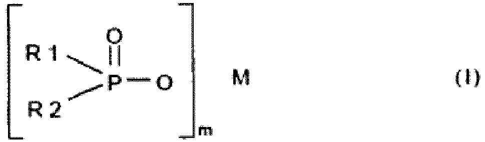 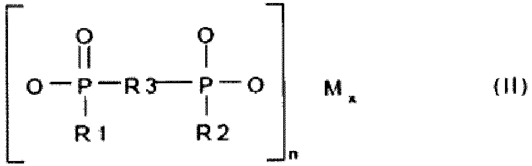 dans lesquelles
R1, R2 sont identiques ou différents et représentent chacun un groupe alkyle en C1-C8, à chaîne droite ou ramifiée, saturé, insaturé, ou partiellement insaturé, et/ou un aryle ;
R3 est un groupe alkylène en C1-C10, à chaîne droite ou ramifiée, saturé, insaturé ou partiellement insaturé, un arylène en C6-C10, un alkylarylène ou un arylalkylène ;
M est un ion hydrogène (proton) ou un ion métallique du deuxième ou du troisième groupe principal ou secondaire du Tableau Périodique, de préférence un ion aluminium, baryum, calcium, magnésium et/ou zinc, et m = 2 ou 3 ; n = 1 ou 3 ; x = 1 ou 2, et
la somme de (A) à (D) étant égale à 100 % en poids, les indications de teneur pour (A) à (D), y compris de (C1) et (C2), étant respectivement rapportées au mélange à mouler ou à la somme de (A) à (D), et de préférence le mélange à mouler étant constitué exclusivement des composants (A) à (D).

2. Mélange à mouler de polycétone selon la revendication 1, **caractérisé en ce que**, indépendamment les unes des autres ou en combinaison les unes avec les autres,
(A) la teneur en l'au moins une polycétone aliphatique est de 32 à 89,7 % en poids, de préférence de 41 à 84,5 % en poids et d'une manière tout particulièrement préférée de 44 à 79,5 ou de 49 à 69,5 % en poids,
(B) la teneur en les matières de charge ou de renforcement est de 10 à 60 % en poids, de préférence comprise entre 15 et 55 % en poids ou entre 20 et 50 % en poids, et d'une manière tout particulièrement préférée de 30 à 45 % en poids,
(C) la teneur en l'au moins un composé phosphoré est de 0,2 à 4 % en poids, de préférence de 0,3 à 3 % en poids et d'une manière tout particulièrement préférée de 0,8 à 3 % en poids, ainsi que
(D) la teneur en l'au moins un additif est de 0,1 à 6 % en poids, de préférence de 0,2 à 3 % en poids.

3. Mélange à mouler de polycétone selon l'une des revendications précédentes, **caractérisé en ce que** l'au moins une polycétone (A) est un polymère de monoxyde de carbone et d'au moins un composé à insaturation oléfinique, choisi de préférence dans le groupe consistant en l'éthène et au moins un composé supplémentaire à insaturation oléfinique ayant au moins 3 à de préférence 20 atomes de carbone, comme par exemple le propène, le 1-butène, l'isobutène, le 1-hexène, le 1-octène, le 1-dodécène, le styrène, le p-méthylstyrène, le p-éthylstyrène, le m-isopropylstyrène, ainsi que les mélanges ou combinaisons de ceux-ci ; d'une manière particulièrement préférée un polymère de monoxyde de carbone et d'éthène ou un terpolymère de monoxyde de carbone, d'éthène et de propène ou de 1-butène.

4. Mélange à mouler de polycétone selon l'une des revendications précédentes, **caractérisé en ce que** l'au moins une polycétone (A) est un terpolymère ayant la formule générale suivante 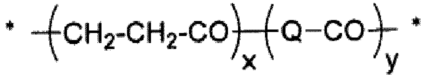 dans laquelle Q est un groupe divalent qui dérive de composés à insaturation oléfinique ayant au moins 3 atomes de carbone, le rapport en moles y : x étant inférieur ou égal à 0,5, de préférence inférieur à 0,2, en particulier inférieur ou égal à 0,1, en particulier de 0,01 à 0,1.

5. Mélange à mouler de polycétone selon l'une des revendications précédentes, **caractérisé en ce que** l'au moins une polycétone aliphatique
a) est une polycétone partiellement cristalline, ayant de préférence une température de fusion, mesurée par ACD selon ISO 11357-3 pour une vitesse de montée en température de 20 K/min, comprise dans la plage de 180 °C à 280 °C, en particulier de 200 à 240 °C,
b) présente une viscosité à l'état fondu (MVR, indice de fluidité), déterminée selon ISO 1133 à 240 °C sous une charge de 2,16 kg, comprise dans la plage de 5 à 200 cm³/10 min, en particulier dans la plage de 10 à 100 cm³/10 min, d'une manière tout particulièrement préférée dans la plage de 20 à 80 cm³/10 min,
c) présente une viscosité relative, mesurée sur des solutions de 0,5 g de polycétone dissous dans 100 ml de m-crésol à 20 °C à l'aide d'un viscosimètre à capillaire, de 1,5 à 2,5, de préférence de 1,6 à 2,2, et/ou
d) une masse molaire moyenne en nombre, déterminée par CPG dans de l'hexafluoroisopropanol par rapport à un étalon PMMA, comprise dans la plage de 20 000 à 100 000 g/mol, en particulier de 30 000 à 60 000 g/mol.

6. Mélange à mouler de polycétone selon l'une des revendications précédentes, **caractérisé en ce que** les matières de charge ou de renforcement sont choisies dans le groupe consistant en les matières de charge fibreuses ou particulaires ou leurs mélanges, qui de préférence sont pourvues d'un agent d'ensimage et/ou d'un promoteur d'adhérence.

7. Mélange à mouler de polycétone selon la revendication précédente, **caractérisé en ce que** les matières de charge fibreuses
a) sont choisies dans le groupe consistant en les fibres de verre, les fibres de carbone, les fibres métalliques, les fibres aramides, les fibres de basalte et les trichites, ainsi que les mélanges et combinaisons de celles-ci,
b) se présentent sous forme de brins continus et/ou sous forme coupée, en particulier de fibres de verre courtes (verrane) et/ou
c) présentent une section transversale circulaire ou une section transversale non circulaire, auquel cas on peut aussi utiliser des mélanges de ces systèmes.

8. Mélange à mouler de polycétone selon la revendication 6, **caractérisé en ce que** les matières de charge particulaires sont choisies dans le groupe consistant en les matières de charge particulaires minérales, de préférence le talc, le mica, un silicate, le quartz, le dioxyde de titane, la wollastonite, le kaolin, les silices amorphes, le carbonate de magnésium, l'hydroxyde de magnésium, la craie, la chaux, le feldspath, les billes de verre pleines ou creuses ou le verre pulvérisé, les flocons de verre, les composés métalliques et/ou les alliages à aimantation permanente ou aimantables, les pigments, en particulier le sulfate de baryum, le dioxyde de titane, l'oxyde de zinc, le sulfure de zinc, l'oxyde de fer, le chromite de cuivre, les poudres métalliques en particulier la poudre de fer, ou les mélanges de ceux-ci.

9. Mélange à mouler de polycétone selon l'une des revendications précédentes, **caractérisé en ce que** l'au moins un phosphite ou phosphonite organique (Composant C2) est choisi dans le groupe consistant en le phosphite de triphényle, le phosphite de diphénylalkyle, le phosphite de phényldialkyle, le phosphite de tris(nonylphényle), le phosphite de trilauryle, le phosphite de trioctadécyle, le diphosphite de distéarylpentaérythritol, le phosphite de tris(2,4-di-tert-butyphényle), le diphosphite de diisodécylpentaérythritol, le diphosphite de bis(2,4-di-tert-butylphényl)pentaérythritol, le diphosphite de bis(2,6-di-tert-butyl-4-méthylphényl)-pentaérythritol, le diphosphite de diisodécyloxypentaérythritol, le diphosphite de bis(2,4-di-tert-butyl-6-méthylphényl)-pentaérythritol, le diphosphite de bis(2,4,6-tris(tert-butylphényl))pentaérythritol, le triphosphite de tristéarylsorbitol, le diphosphonite de tétrakis(2,4-di-tert-butylphényl)-4,4'-biphénylène, la 6-isooctyloxy-2,4,8,10-tétra-tert-butyl-12H-dibenz[d,g]-1,3,2-dioxaphosphocine, la 6-fluoro-2,4,8,10-tétra-tert-butyl-12-méthyl-dibenz[d,g]-1,3,2-dioxaphosphocine, le phosphite de bis(2,4-di-tert-butyl-6-méthylphényl)méthyle et le phosphite de bis(2,4-di-tert-butyl-6-méthylphényl)-éthyle. On préfère particulièrement le phosphite de tris[2-tert-butyl-4-thio(2'-méthyl-4'-hydroxy-5'-tert-butyl)-phényl-5-méthyl]-phényle et le phosphite de tris(2,4-di-tert-butylphényle.

10. Mélange à mouler de polycétone selon l'une des revendications précédentes, **caractérisé en ce que** l'au moins un additif (Composant D) est choisi dans le groupe consistant en les stabilisants, en particulier les stabilisants à la chaleur, aux UV et/ou à la lumière, les antioxydants, les auxiliaires de mise en oeuvre, les polymères différents des polycétones aliphatiques, en particulier les polyoléfines, les polyoléfines à modification acide ou anhydride, les polyesters, les polyamides, en particulier les polyamides aliphatiques, les agents modifiant la résistance au choc, les promoteurs d'adhérence, les accélérateurs ou les retardateurs de cristallisation, les auxiliaires d'écoulement, les lubrifiants, les agents de démoulage, les plastifiants, les fixateurs de radicaux, les antistatiques, les colorants et matières de marquage, les nanoparticules sous forme lamellaire, les phyllosilicates, les additifs de conductivité tels que le noir de carbone, la poudre de graphite ou les nanofibrilles de carbone, les résidus de procédés de polymérisation tels que les catalyseurs, les sels et leurs dérivés, les composés métalliques oxygénés, azotés ou sulfurés, ainsi que les régulateurs tels que par exemple les monoacides ou les monoamines, ainsi que les mélanges ou combinaisons de ceux-ci.

11. Objet moulé fabriqué à partir d'un mélange à mouler de polycétone selon l'une des revendications précédentes, en particulier sous forme de boîtiers, de pièces fonctionnelles pour pompes, engrenages, soupapes, compteurs d'eau, clapets de régulation, cylindres, pistons, boîtiers de projecteurs, réflecteurs, réglages de projecteurs tournants, roues dentées, paliers pour moteurs et engrenages, raccords à fiches, connecteurs, profilés, feuilles ou couches de feuilles multicouches, fibres, composants électroniques, en particulier composants pour appareils électroniques portables, boîtiers pour composants électroniques, connecteurs, boîtiers de téléphones mobiles, composants pour boîtiers de LED, boîtiers ou parties de boîtiers pour ordinateurs personnels, en particulier boîtiers pour ordinateurs portables, outils, matériaux composites, conduites transportant un fluide et récipients, en particulier dans le domaine automobile, tubes monocouches ou multicouches lisses ou ondulés, tronçons de tubes, tubulures, raccorderies pour raccorder des tuyaux flexibles, tubes ondulés et conduites pour fluides, constituants de conduites multicouches (couche intérieure, couche extérieure ou couche intermédiaire), couches individuelles pour récipients multicouches, conduites hydrauliques, conduites de freins, conduites d'embrayage, conduites pour liquides de refroidissement ou récipients pour liquides de frein.

12. Procédé de fabrication d'un objet moulé selon la revendication précédente par moulage par injection, extrusion ou extrusion-soufflage.
